# EUROPEAN PATENT APPLICATION

(11) **EP 1 739 552 A1**
(43) Date of publication of application: **03.01.2007**
(21) Application number: 05105456.7
(22) Date of filing: 21.06.2005
(51) Int. Cl.: G06F 9/445, G06F 9/44

(54) **Software installation method and computer system**

(71) Applicant: Hewlett-Packard Development Company, L.P., Houston, Texas 77070 (US)
(72) Inventor: Maier, Henning, 71034, Boeblingen (DE); Schlipf, Carsten, 71034, Boeblingen (DE); Carsten, Heiming, 71034, Boeblingen (DE); Friedle, Birgit, 71034, Boeblingen (DE)
(74) Representative: Lloyd, Richard Graham

(57) **Abstract**

A method and a computer system are provided for installing a first software component into a computing environment, the computing environment comprising an already installed second software component. The method involves aborting the installation if the first and second software components have matching component identifiers and a current-version identifier of the first software component signifies an earlier version than an earliest-compatible-version identifier of the second software component.

## Description

### Field of the invention

The present invention relates to the field of computer systems and methods, and more particularly without limitation to the field of software installation.

### Background and prior art

Often, software products such as applications of related functionality are grouped together as a software suite. One advantage of software suites is that different software products may share part of their functionality in the form of shared software components. If several software products of a software suite are installed on a single computer system, some of the software products may rely on the same shared components, being installed only once on the computer system. Besides the advantage of reducing the amount of persistent storage required for installation, using shared components may also reduce the amount of volatile memory required when executing more than one software product of the software suite simultaneously.

The installation of shared software components and software products depending on them is more complex than the installation of standalone software products that have no interdependency with other installed software products. A release version of a first software product from a software suite will include with it a number of software components, each in turn having been assigned a version representing a certain stage in the development history of the respective component. A second software product from the same software suite released at a later point in time will often include later versions of some of the software components included with the first software product. Because later versions of a software component are likely to provide functionality that earlier versions lack, an earlier version of a software component must not be replaced with an earlier version. Furthermore, replacing an earlier version of a software component with a later version is possible only to the extent that the later version is backward compatible, that is, it provides all the functionality of the earlier version. Once a later version of a software component is released that breaks backward compatibility with an earlier version, a software product that requires the earlier version can no longer share the software component with another software product that requires the later version.

As described by Apple Computer, Incorporated (http://developer.apple.com/documentation/MacOSX/Conceptual/BPFrameworks/Concepts/Versionlnformation.html), shared components on the Mac OS X operating system known as frameworks are assigned two types of versions: major (or incompatible) and minor (or compatible) versions. A major version of a framework is also known as an incompatible version because it breaks compatibility with programs linked to a previous version of the framework's dynamic shared library. Because all major versions of a framework are kept within a directory enclosing the framework, a program that is incompatible with the current version can still run against an older version if needed. The path of each major version encodes the version. When a program is built, the linker records this path in the program executable file. Thus the major versioning scheme enables backward compatibility of a framework by including all major versions and recording the major version for each executable to run against.

As described by Apple Computer, Incorporated (http://developer.apple.com/documentation/ DeviceDrivers/Conceptual/IOKitFundamentals/Families/chapter_7_section_3.html), to be available for loading and linking into the kernel of the Mac OS X operating system, a library has to declare its compatibility information using two properties: CFBundieVersion and OSBundleCompatibleVersion. The CFBundieVersion property defines the forward limit of compatibility-that is, the current version. The OSBundleCompatibleVersion property defines the backward limit of compatibility by identifying the last CFBundleVersion-defined version of the library that broke binary compatibility with prior versions. If the kernel-extension manager does not find a library with a compatible version (based on the value of OSBundleCompatibleVersion), it stops and (usually) returns a failure code. The modules already loaded stay loaded awhile.

### Summary of the invention

In accordance with the present invention there is provided a method of installing a first software component into a computing environment in which a second software component is already installed. Both the first and second software components respectively comprise a component identifier, a current-version identifier, and an earliest-compatible-version identifier. The method involves determining whether the component identifier of the second software component matches the component identifier of the first software component. If it could be determined that the component identifiers match, the current-version identifier of the first software component is compared to the earliest-compatible-version identifier of the second software component. If it is determined that the current-version identifier of the first software component signifies an earlier version than the earliest-compatible-version identifier of the second software component, the installation is aborted.

Preferably the component identifier of a given software component serves to distinguish different software components from each other whereas the current-version identifier serves to distinguish different versions of the same software component from each other. The earliest-compatible-version identifier of a software component signifies the earliest version of itself to which the current version of the software component is backward compatible.

If the current-version identifier of the first software component signifies an earlier version than the earliest-compatible-version identifier of the second software component, the second software component is of a later current version that is not backward compatible to the current version of the first software component. Replacing the second software component with the first software component might prevent a software product or other software component from functioning that depends on the second software component because the first software component, being of an earlier current-version than the second software component, will not provide all of the functionality of the second software component. Not replacing the second software component with the first software component might prevent a software product or other software component from functioning that depends on the first software component because the second software component, not being backward compatible to the current version of the first software component, will not provide all of the functionality of the first software component.

The present invention is particularly advantageous because by aborting the installation of a software component in the case of a detected conflict, leaving a non-functioning computing environment as the result of the installation process is prevented. Because the detection of a possible conflict happens at install time, the installing user can be alerted to the reason why the installation was aborted, and can be guided on how to rectify the situation.

The present invention is particularly advantageous because it enables to ensure that as result of a completed installation process both the functionality of the first software component, which is to be installed, and the functionality of the second software component, which is already installed, are available to software products or other software components that depend on either of the software components. Of particular advantage is furthermore that few constraints are placed on the development of new versions of a software component. The invention does not require extending backward compatibility of a software component to previous versions indefinitely. The versioning scheme does not require making a distinction between major and minor version changes, where major version changes break backward compatibility. Instead a gradual approach where parts of a software component's functionality are deprecated in one version and removed in a later version may be followed. The invention does not mandate a software component to be designed to enable concurrent installation of different versions of the software component in a computing environment. If however different versions of a software component are desired to be installed concurrently, it is most easily possible by assigning the versions different component identifier, therefore treating them as different components rather than different versions of the same component.

In accordance with an embodiment there is provided a computer system comprising a set of installed software components. Each software component has a component identifier, a current-version identifier, and an earliest-compatible-version identifier.

The computer system further comprises a component matrix and a dependency matrix. In the component matrix there is an entry for each software component of the set of software components, each of the entries for one of the software components comprising the component identifier, the current-version identifier, and the earliest-compatible-version identifier of the software component. In the dependency matrix there is an entry for each dependency of a depending software component of the set of software components on a depended-on software component of the set of software components, each of the entries for one of the dependencies comprising the component identifier of the depending software component, the current-version identifier of the depending software component, the component identifier of the depended-on software component, and the current-version identifier of the depended-on software component.

### Brief description of the drawings

In the following preferred embodiments of the invention will be described in greater detail by way of example only making reference to the drawings in which:
- Figure 1: is a block diagram of a first embodiment of a computer system of the invention,
- Figure 2: is an example of the structure and content of matrices maintained by a method of the invention,
- Figure 3: is a flowchart of a method of the invention, and
- Figure 4: is a timeline diagram of the respective version identifiers of an installed and a to-be-installed software component.

### Detailed description

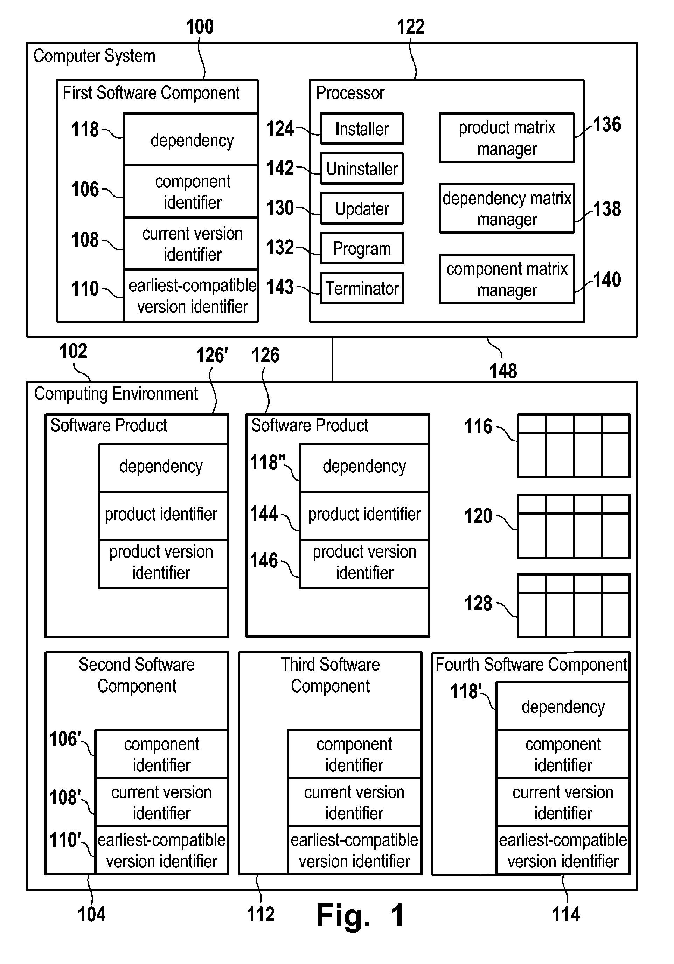

Figure 1 is a block diagram of a first embodiment of a computer system 148 of the invention. The computer system is connected to a computing environment 102 that can be part of the computer system itself. The computer system comprises a processor 122 capable of executing an installer 124 for installing software products and software components such as a first software component 100 into the computing environment. Already installed in the computing environment are further software products 126, 126' and software components 104, 112, and 114. Each software product comprises a product identifier and a product-version identifier. Each of the software components comprises a component identifier, a current-version identifier, and an earliest-compatible version identifier. The component identifier serves to distinguish different software components from each other. The current-version identifier serves to distinguish different versions of the same software component from each other. The earliest-compatible-version identifier of a software component denotes the earliest version of itself to which the software component is backward compatible. Backward compatible means that the software component provides all the functionality of a further software component with a component identifier that matches the component identifier of the software component and a current-version identifier that denotes a version not earlier than denoted by the earliest-compatible-version identifier of the software component and not later than denoted by the current-version identifier of the software component.

Software components and software products can comprise one or more dependencies 118, 118', 118" on depended-on software components, that is, for being functional they require the functionality of the depended-on software components. Each dependency on a depended-on software component defines both the component identifier and the current-version of the depended-on software component. In order for a software component installed in the computing environment to satisfy a dependency, the component identifier of the installed software component must match the component identifier defined by the dependency, and the version denoted by the current-version identifier of the installed software component must be equal to or later than the current-version defined by the dependency.

The processor 122 can further comprise a component matrix manager 140, product matrix manager 136, and dependency matrix manager 138 for maintaining a corresponding component matrix 116, product matrix 128, and dependency matrix 120 in the computing environment. As an alternative to maintaining the matrices in separate form, the contents of any one of the matrices can be merged into another one of the matrices. For example, the contents of the product matrix can be merged into the dependency matrix. During an installation of software products and software components the installer 124 uses the functionality of the matrix managers to record information about the newly installed software products and software components in the matrices, creating the matrices where necessary. Before an installation, the installer relies on the functionality of the matrix managers to determine from the information recorded in the matrices whether the installation would lead to a conflict and has to be aborted, and also to determine which of the installed software components have to be removed or to be replaced with different versions of themselves.

The processor 122 preferably further comprises an uninstaller 142 for removing software products and software components from the computing environment. When uninstalling a software product, the software product itself is removed from the computing environment. Preferably, the product matrix manager 136 removes all entries referring to a software component delivered with the removed software product from the product matrix 128. Then, the dependency matrix manager 138 removes all entries of dependencies of the removed software product from the dependency matrix 120. Then the uninstaller removes all software components from the computing environment for which there is neither an entry in the product matrix of a depending of a further software product on the element of the set of software components nor an entry in the dependency matrix of a depending of a further software component on the element of the set of software components. The dependency matrix manager 138 removes from the dependency matrix each of the entries that describe a dependency of any of the software components removed by the uninstaller. The component matrix manager 140 removes from the component matrix each of the entries that describe any of the software components removed by the uninstaller.

Alternatively, a reference counter for every installed software component is maintained, the reference counter for a software component being incremented from zero for every dependency of a software product on the software component. When uni n-stalling a software product, the software component is removed if the reference counter has the value one, the reference counter being decremented otherwise. This task can be handled by a native installation system of the computing environment.

In operation, before installing the first software component 100 into the computing environment 102, the installer 124 determines whether a second software component 104 with a component identifier 106' that matches the component identifier 106 of the first software component 100 is already installed in the computing environment. Preferably, the installer relies on the component matrix manager 140 that provides functionality for maintaining a component matrix 116 in the computing environment. The component matrix manager obtains the required information from the component matrix 116 comprising an entry for each of the set of software components installed in the computing environment. The component matrix manager searches the component matrix for an entry comprising the same component identifier as the first software component.

The processor 122 preferably further comprises an updater 130 for replacing the second software component with the first software component if the current-version identifier of the first software component denotes a later version than the current-version identifier of the second software component. The updater can be part of a native installation system of the computing environment.

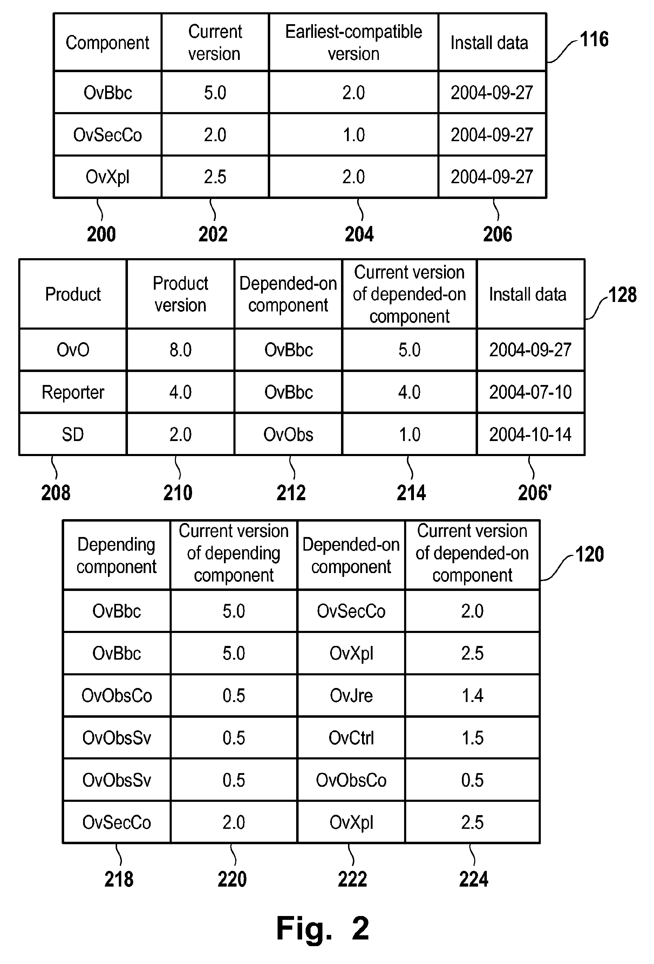

Figure 2 shows examples of the component, product, and dependency matrices maintained in the computing environment.

In the component matrix 116 the software components installed in the computing environment are tracked together with their version and backward compatibility information. When installing a software component an entry is created in the component matrix 116 for the software component that comprises the component identifier 200, current-version identifier 202, and earliest-compatible-version identifier 204 of the software component. Preferably the date of installation 206 is recorded. The component matrix itself is created if it does not yet exist.

During future installations of the same software component the entry is read and a decision made based on the entry whether a conflict exists that requires aborting the installation, and whether the software component will be updated to a newer version. When a software component is replaced with another version of itself, the component matrix manager replaces the corresponding entry in the component matrix. When the uninstaller removes a software component from the computing environment, it calls the component matrix manager to remove the corresponding entry from the component matrix, preferably removing the entire component matrix if the entry removed was the only entry. The component matrix manager can be enabled to handle concurrent installation of different versions of a software component in the computing environment by assigning different component identifiers to the different versions, thus making them appear to be different components rather than different versions of the same component.

In the product matrix 128 it is tracked which software components were delivered with a software product. When installing a software product, for each software component delivered with the software product an entry is created in the product matrix 128 that comprises the product identifier 208 and product version 210 of the software product, and the component identifier 212 and current-version identifier 214 of the software component delivered with the software product. Preferably the date of installation 206' is recorded. The product matrix itself is created if it does not yet exist.

If the same software component is delivered in the same version or in different versions with two or more software products, two or more entries are created, each corresponding to the delivery of the software component with one of the software products. This is illustrated by the first and second row of the example matrix 128, where two versions, 5.0 and 4.0, of the software component OvBbc were delivered with two different software products, OVO and Reporter. When the uninstaller removes a software product from the computing environment, it calls the product manager to remove all entries referring to the delivery of a software component with the software product to be removed, preferably removing the product matrix itself if no entries remain. When the updater replaces a first version of a software product with a second version of the software product, all entries referring to the delivery of the first version of the software product are removed and respective entries added referring to each software component delivered with the second version of the software product.

In the dependency matrix 120 it is tracked upon which software components installed software products or other software components depend. When installing software components, for each dependency of a depending software component on a depended-on software component an entry is created in the dependency matrix 120 that comprises the component identifier 218 of the depending software component, the current-version identifier 220 of the depending software component, the component identifier 222 of the depended-on software component, and the current-version identifier of the depended-on software component. When installing a software product, preferably an analogous entry is created in the dependency matrix for each dependency of the software product on a depended-on software component. The entry comprises the product identifier in place of the component identifier 218 of the depending component, the product version identifier in place of the current-version identifier 220 of the depending component, the component identifier 222 of the depended-on software component, and the current-version identifier of the depended-on software component The dependency matrix itself is created if it does not yet exist.

When the uninstaller removes a software component from the computing environment, it calls the dependency matrix manager to remove all entries for dependencies of the software component on other software components from the dependency matrix. When the updater replaces a first version of a software component with a second version of the software component, all entries referring to a dependency of the software component on another software component are removed. When the updater replaces a first version of a software component with a second version of the software component, all entries referring to dependencies of the first version of the software component on another software component are removed and respective entries added referring to each dependency of the second version of the software component on another software component. Analogously, when the updater replaces a first version of a software product with a second version of the software product, all entries referring to dependencies of the first version of the software product on a software component are removed and respective entries added referring to each dependency of the second version of the software product on a software component.

The contents of any one of the matrices can be merged into another one of the matrices, thus reducing the number of matrices maintained in the computing environment. For example, the contents of the product matrix can be merged into the dependency matrix, recording both the dependencies on software components 212 by a software product and the dependencies on software components 222 by another software component in the same matrix 120.

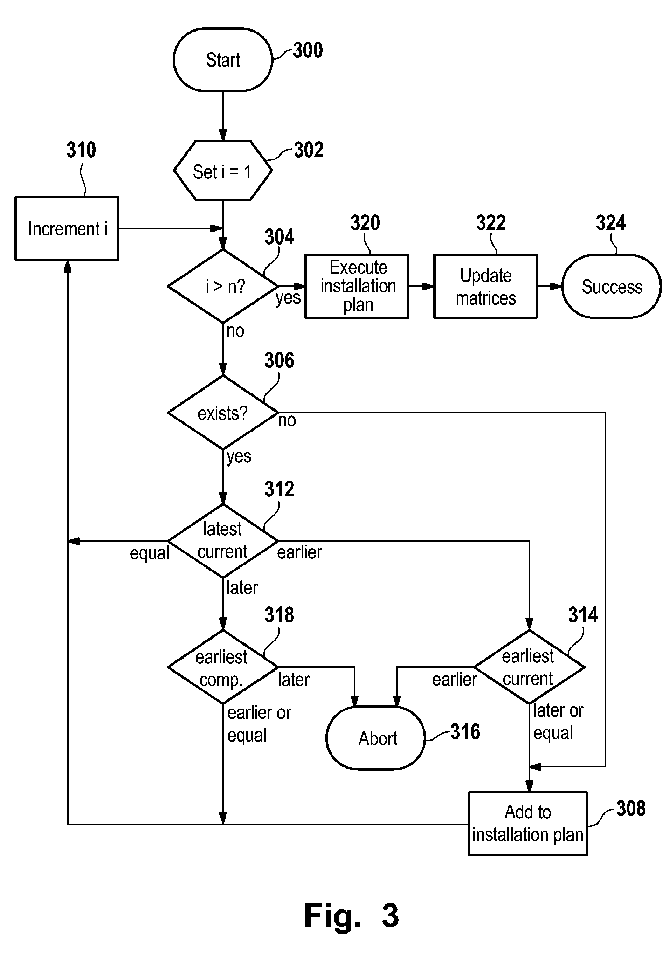

Figure 3 shows a flowchart illustrating a preferred process by which a group of n new software components such as belonging to a software package is being installed into the computing environment. The process comprises a loop iterating over the n software components, evaluating in turn for each component whether it conflicts with another software component already installed in the computing environment. If a conflict is detected the installation of the entire group is aborted in step 316, without any changes having been applied to the computing environment.

After the start of the process in step 300 a loop counter i is set to 1 in a preparation step 302. Upon entering the loop in step 304 the loop counter i is compared to the number n of the software components in the group of new software components, continuing with the examination of the i-th newly to be installed software component unless the stop criterion i > n evaluates to true. In step 306 it is determined whether there exists a software component already installed in the computing environment that has a component identifier matching the component identifier of the i-th newly to be installed software component. If no such software component exists the i-th newly to be installed software component is added to an installation plan in step 308. The loop counter i is incremented in step 310 and the loop re-entered. Execution of the installation plan in step 320 is deferred until after the loop has iterated over all n software components and the compatibility of the entire group has been verified.

Preferably, the step of determining the existence 306 involves searching the component matrix for an entry comprising the same component identifier as the i-th newly to be installed software component. Alternatively, the product matrix or the dependency matrix can be searched for entries describing a dependency on a software component with the same component identifier as the i-th newly to be installed software component. If at least one such entry is found, it can be concluded that a software component with the component identifier searched for is already installed in the computing environment.

If in step 306 it has been determined that a software component with the same component identifier as the i-th newly to be installed software component is already installed in the computing environment, the current-version of the already installed software component is in step 312 compared to the current-version of the i-th newly to be installed software component. If both versions are equal, no further action is required with regard to the i-th newly to be installed software component because an identical software component is already installed in the computing environment. The loop counter i is incremented in step 310 and the loop re-entered.

Preferably, the step 312 of comparing the current-version of the already installed software component to the current-version of the i-th newly to be installed software component involves obtaining the current-version of the already installed software component from the component-matrix entry comprising the same component identifier as the i-th newly to be installed software component. Alternatively, the current-version of the already installed software component can be obtained by determining the latest current-version of a depended-on component recorded in one of the one or more entries in the product matrix or dependency matrix describing a dependency on a software component with the same component identifier as the i-th newly to be installed software component.

If in step 312 it has been determined that the current-version of the already installed software component is later than the current-version of the i-th newly to be installed software component, the process advances to step 318. In step 318 it is determined whether the already installed software component is backward compatible with the i-th newly to be installed software component by comparing the earliest-compatible-version identifier of the already installed software component to the current-version identifier of the i-th newly to be installed software component. If the earliest-compatible-version identifier of the already installed software component denotes a version later than the current-version of the i-th newly to be installed software component, the installation of the entire group of new software components is aborted in step 316. If the earliest-compatible-version identifier of the already installed software component denotes a version earlier than or equal to the current version of the i-th newly to be installed software component, no further action with regard to the i-th newly to be installed software component is required because the already installed software component provides all the functionality of the i-th newly to be installed software component. The loop counter i is incremented in step 310 and the loop re-entered.

If in step 312 it has been determined that the current-version of the already installed software component is earlier than the current-version of the i-th newly to be installed software component, the process advances to step 314. Because the i-th newly to be installed software component will not necessarily provide all of the functionality of the already installed software component the already installed software component needs to be updated by replacing it with the i-th newly to be installed software component. In step 314 it is determined whether the replacing would break any dependencies of other software components or products on the already installed software component.

Preferably determining whether the replacing would break any dependencies involves finding the earliest current-version of a depended-on component recorded in one of the one or more entries in the product matrix or dependency matrix that describe a dependency on a software component with the same component identifier as the i-th newly to be installed software component. If the version found is earlier than the earliest-compatible-version of the i-th newly to be installed software component, the installation of the entire group of new software components is aborted in step 316. If the version found is equal or later than the earliest-compatible-version of the i-th newly to be installed software component, the i-th newly to be installed software component is added to the installation plan in step 308. The loop counter i is incremented in step 310 and the loop re-entered.

If the loop has iterated over the entire group of n new software components without aborting the process in step 316, the loop counter i is incremented to n+1 in step 310. The stop criterion i>n evaluates to true in step 304, the loop is left, and the process advances to the execution of the installation plan in step 320. If during the iteration of the loop any of the n new software components were added to the installation plan in step 308, these newly to be installed software components are now installed into the computing environment, replacing already installed software components with matching component identifiers where such already installed software components exist. The matrices maintained in the computing environment are updated in step 322 to reflect the changes made in step 320. Because the absence of conflicts is tested before the installation plan, full functionality of both the previously installed software components and products and the newly installed software components and products is guaranteed.

A modified installation process can be followed, where instead of adding the i-th newly to be installed component to an installation plan in step 308, the component is installed immediately and the matrices updated accordingly before re-entering the loop. The modified installation process does not require step 320 of carrying out the installation plan and step 322 of updating the matrices. If a conflict is detected and the installation of the entire group aborted in step 316, the components installed so far remain installed. For example, it might happen that the first three components are installed and then a conflict is detected. In this case the first three components remain upgraded when the installation is aborted. However, as every newly installed component was checked for conflict and installed only if no conflict was found, already installed software products installed in the computing environment remain in a state where they can be run, even if the computing environment has been changed by the aborted installation. The computing environment is left in a state as if a patch consisting of new, compatible versions of the newly installed software components had been applied.

The modified installation process is particularly well suited for integration with a native software installation system provided by the computing environment, such as the Microsoft Installer (MSI) available on the Microsoft Windows family of operating systems. The installation can be modularized into component installation packages for each newly to be installed software component and a surrounding product installation package. The surrounding product installation calls the component installations one after the other in the correct order, while presence or absence of conflicts is eval u-ated as part of each component installation, preferably by executing a script that is part of the component installation package. Independent of whether the native software installation system is designed in such a way that a component installation package is always skipped if a newer version of the component to be installed is already installed, the script will be able to execute determination step 314 and be able to prevent any conflict that would affect already installed software products.

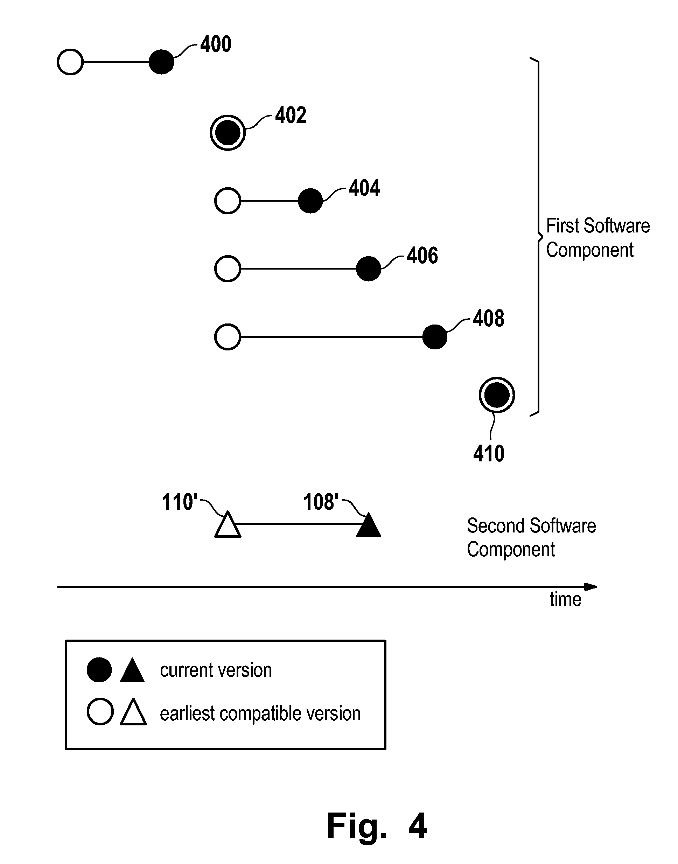

Figure 4 is a timeline diagram of the respective version identifiers of a first software component to be installed and a second software component already installed. The version identifiers of the second software component are marked by triangles, a filled triangle representing the current-version 108' and an open triangle representing the earliest-compatible-version 110' of the second software component. A line is drawn between them to mark the extent of compatibility of the second software component, the current-version being the forward limit and the earliest-compatible-version being the backward limit of compatibility.

Several examples 400, 402, 404, 406, 408, and 410 are given for possible values of the current-version and earliest-compatible-version identifiers of the first software component. In each of the examples, a black circle marks the current-version of the first software component and an open circle marks the earliest-compatible-version of the first software component. In example 400, the current-version of the first software component is earlier than the earliest-compatible-version of the second software component. In this situation the installation is aborted because the second software component is not backward compatible to the first software component, and installing the first software component over the second software component would break already installed software products that rely on the newer current-version of the second software component.

In example 402 the current-version of the first software component is equal to the earliest-compatible-version but earlier than the current-version of the second software component. In this situation no conflict exists, and nothing needs to be done. Installing the first software component over the second software component would break already installed software products that rely on the newer current version of the second software component. However, the second software component is backward compatible with the first software component, meaning that the functionality provided by the first software component is also covered by the second software component. Any software product or further software component requiring the functionality of the first software component will therefore work with the second software component as well.

In example 404, the current-version of the first software component is later than the earliest-compatible-version and earlier than the current-version of the second software component. As in example 402, no conflict exists, and nothing needs to be done because the already installed second software component is backward compatible with the first software component.

In example 406, the current-version of the first and second software components, and therefore the first and second software components themselves, are identical. No conflict exists and nothing needs to be done because installing the first software component over the second would not change the computing environment.

In example 408, the current-version of the second software component is later than the earliest-compatible-version of the first software component but earlier than the current-version of the first software component. For the benefit of software products or other software applications requiring the functionality of the first software component it is necessary to install the first software component, replacing the second software component. This does not cause a conflict because the first software component is backward compatible with the second software component. After the installation, the first software component will be able to provide the necessary functionality to the software products or other software components that have so far depended on the second software component.

In example 410, the current-version of the second software component is earlier than both the current-version and the earliest-compatible-version of the first software component. Installing the first software component is necessary to support the software products or other software components requiring the functionality of the first software component. However, this would lead to a conflict because the first software component is not backward compatible with the second software component, and replacing the second software component with the first software component would break those software products or other software components that require the functionality of the second software component.

### List of Reference Numerals

- 100: First software component
- 102: Computing environment
- 104: Second software component
- 106: Component identifier
- 108: Current-version identifier
- 110: Earliest-compatible-version identifier
- 112: Third software component
- 114: Fourth software component
- 116: Component matrix
- 118: Dependency on a software component
- 120: Dependency matrix
- 122: Processor
- 124: Installer
- 126: Software product
- 128: Product matrix
- 130: Updater
- 132: Program instructions
- 134: Terminator
- 136: Product matrix manager
- 138: Dependency matrix manager
- 140: Component matrix manager
- 142: Uninstaller
- 144: Product identifier
- 146: Product version identifier
- 148: Computer system
- 200: Component identifier entry in component matrix
- 202: Current-version identifier entry in component matrix
- 204: Earliest-compatible version entry in component matrix
- 206: Install date
- 208: Product identifier in product matrix
- 210: Product-version identifier in product matrix
- 212: Component identifier of depended-on component in product matrix
- 214: Current-version identifier of depended-on component in product matrix
- 218: Component identifier entry of depending component or product identifier of depending product in dependency matrix
- 220: Current-version identifier entry of depending component or product-version identifier of depending product in dependency matrix
- 218: Component identifier entry of depended-on component in dependency matrix
- 220: Current-version identifier entry of depended-on component in dependency matrix
- 300: Start of installation process
- 302: Loop counter initialization
- 304: Stop criterion evaluation
- 306: Test for existence of an installed component with the same component identifier
- 308: Add software component to installation plan
- 310: Increment loop counter
- 312: Comparison of the software component's current version identifier to latest corresponding current version from the product matrix
- 314: Comparison of the software component's earliest-compatible version identifier to the earliest corresponding current version from the product matrix
- 316: Abort without installing
- 318: Comparison of the software component's current version to the earliest corresponding earliest-compatible version from the component-compatibility matrix
- 320: Execution of installation plan
- 322: Update matrices
- 324: Success of installation
- 400: Current version of first software component earlier than earliest-compatible version of second
- 402: Current version of first software component equal to earliest-compatible version of second
- 404: Current version of first software component between earliest-compatible version and current version of second
- 406: Current version of first software component equal to current version of second
- 408: Current version of second software component between earliest-compatible version and current version of first
- 410: Earliest-compatible version of first software component later than current version of second

## Claims

1. A method for installing a first software component (100) into a computing environment (102), the computing environment comprising a second software component (104) installed in the computing environment, each of the software components respectively comprising a component identifier (106, 106'), a current-version identifier (108, 108'), and an earliest-compatible-version identifier (110, 110'), the method comprising:
• determining if the component identifier (106') of the second software component matches the component identifier (106) of the
first software component,
• determining if the current-version identifier (108) of the first software component denotes an earlier version than the earliest-compatible-version identifier (110') of the second software component, and
• aborting the installation if the current-version identifier of the first software component signifies an earlier version than the earliest-compatible-version identifier of the second software component.

2. The method of claim 1, wherein the earliest-compatible-version identifier (110') of the second software component (104) denotes the earliest version of the second software component to which the second software component is backward compatible.

3. The method of claim 1 or 2, the computing environment comprising a plurality of already installed software components (104, 112, 114), the method further comprising searching the second software component among the plurality of software components using the first component identifier as a search criterion.

4. The method of any of the preceding claims, further comprising:
• determining if the current-version identifier of the first software component denotes a later version than the current-version identifier of the second software component, and
• replacing the second software component with the first software component if the current-version identifier of the first software component denotes a later version than the current-version identifier of the second software component.

5. The method of any of the preceding claims, further comprising making an entry in a component matrix (116) for the first software component, the entry in the component matrix comprising the component identifier, the current-version identifier, and the earliest-compatible-version identifier of the first software component.

6. The method of any of the preceding claims, further comprising incrementing a reference counter for the first software component.

7. The method of any of the preceding claims, the first software component comprising a dependency (118) on a third software component (112), the method further comprising making an entry in a dependency matrix (120) for the dependency of the first software component on the third software component, the entry in the dependency matrix comprising the component identifier of the first software component, the current-version identifier of the first software component, the component identifier of the third software component, and the current-version identifier of the third software component.

8. The method of any of the preceding claims, further comprising:
• determining if a fourth software component (114) comprising a dependency (118') on the second software component is installed in the computing environment,
• determining if the fourth software component requires a version of the second software component that is earlier than the version i n-dicated by the earliest-compatible-version identifier of the first software component, and
• aborting the installation if the fourth software component requires a version of the second software application that is earlier than indicated by the earliest-compatible-version identifier of the first software component.

9. The method of claim 8, wherein the fourth software component is a software product (126) comprising a product identifier and a product-version identifier.

10. The method of claim 9, wherein the dependency (118") of the software product on the second software component is recorded as an entry in a product matrix (128), the entry in the product matrix comprising the product identifier, the product-version identifier, the component identifier of the second software component, and the current-version identifier of the second software component.

11. A computer program product comprising computer-executable instructions for performing a method of any of the preceding claims.

12. A computer system (148, 102) comprising:
• a set of software components (104, 112, 114), each software component comprising a component identifier (106, 106'), a current-version identifier (108, 108'), and an earliest-compatible-version identifier (110, 110'),
• a component matrix (116) comprising an entry for each software component of the set of software components, one of the entries for one of the set software components comprising the component identifier, the current-version identifier, and the earliest-compatible version identifier of the one of the set of software components,
• a dependency matrix (120) comprising an entry for each dependency of a depending software component of the set of software components on a depended-on software component of the set of software components, the entry comprising the component identifier of the depending software component, the current-version identifier of the depending software component, the component identifier of the depended-on software component, and the current-version identifier of the depended-on software component.

13. The computer system of claim 12, further comprising:
• a software product (126) depending on a subset of the set of software components, the software product comprising a product identifier and a product version identifier,
• a product matrix (128) comprising an entry for each dependency of the software product on a depended-on software component of the subset of the set of software components, the entry comprising the product identifier of the software product, the product version identifier of the software product, the component identifier of the depended-on software component, and the current-version identifier of the depended-on software component.

14. The computer system of claim 12 or 13, further comprising a product uninstaller, the product uninstaller comprising:
• a core uninstaller (124) for removing the software product from the computer system,
• a product matrix manager (136) for removing from the product matrix each of the entries that describe a dependency of the software product on an element of the subset of the set of software products,
• a component uninstaller (124) for removing from the computer system each element of the set of software components for which there is neither an entry in the product matrix of a depending of a further software product on the element of the set of software components nor an entry in the dependency matrix of a depending of a further software component on the element of the set of software components,
• a dependency matrix manager (138) for removing from the dependency matrix each of the entries that describe a dependency of any of the software components removed by the component uninstaller, and
• a component matrix manager (140) for removing from the component matrix each of the entries that describe any of the software components removed by the component uninstaller.

15. A computer system (148) comprising:
• a first software component (100) to be installed in a computing environment (102) and a second software component (104) already installed in the computing environment, the first and second software components respectively comprising a component identifier (106, 106'), a current-version identifier (108, 108'), and an earliest-compatible-version identifier (110, 110'),
• an installer (124) for installing the first software component into the computing environment,
• program instructions (132) for determining if the component identifier of the second software component matches the component identifier of the first software component,
• further program instructions (132) for determining if the current-version identifier of the first software component denotes an earlier version than the earliest-compatible-version identifier of the second software component, and
• a terminator (134) for aborting the installation if the current-version identifier of the first software component signifies an earlier version than the earliest-compatible-version identifier of the second software component.

16. The computer system of claim 15, wherein the earliest-compatible-version identifier (110') of the second software component (104) denotes the earliest version of the second software component, to which the second software component is backward compatible.

17. The computer system of claim 15 or 16, the computing environment comprising a plurality of already installed software components (104, 112, 114), the program instructions (132) for determining if the second software component (104) has the same component identifier as the first software component (100) adapted to determining whether there is a second software component among the plurality of software components that has the same component identifier as the first software component.

18. The computer system of any of claim 15 to 17, further comprising:
• program instructions (132) for determining if the current-version identifier (108) of the first software component (100) denotes a later version than the current-version identifier (108') of the second software component (104), and
• an updater (130) for replacing the second software component with the first software component if the current-version identifier of the first software component denotes a later version than the current-version identifier of the second software component.

19. The computer system of any of claim 15 to 18, further comprising a component matrix manager (140) for making an entry in a component matrix (116) for the first software component, the entry in the component matrix comprising the component identifier (200), the current-version identifier (202), and the earliest-compatible-version identifier (204) of the first software component.

20. The computer system of any of claim 15 to 19, the first software component (100) depending on a third software component (112), the computer system further comprising a dependency matrix manager (138) for making an entry in a dependency matrix (120) for the dependency of the first software component on the third software component, the entry in the dependency matrix comprising the component identifier (218) of the first software component, the current-version identifier (220) of the first software component, the component identifier (222) of the third software component, and the current-version identifier (224) of the third software component.

21. The computer system of any of claim 15 to 20, further comprising
• program instructions (132) for determining if a fourth software component (114) depending on the second software component (104) is installed on the computer system,
• program instructions (132) for determining if the fourth software component requires a version of the second software component that is earlier than the version indicated by the earliest-compatible-version identifier (110) of the first software component, and
• a terminator for aborting the installation if the fourth software component requires a version of the second software application that is earlier than indicated by the earliest-compatible-version identifier of the first software component.

22. The computer system of claim 21, wherein the fourth software component is a software product (126) comprising a product identifier (144) and a product-version identifier (146).

23. The computer system of claim 22, wherein the dependency on the second software component (118") is recorded as an entry in a product matrix (128), the entry in the product matrix comprising the product identifier (208), the product-version identifier (210), the component identifier (212) of the second software component, and the current-version identifier (214) of the second software component.+
